Europäisches Patentamt

European Patent Office

Office européen des brevets

(19)

(11) Publication number: **0 244 885 B1**

(12) **EUROPEAN PATENT SPECIFICATION**

(45) Date of publication of patent specification :
05.06.91 Bulletin 91/23

(51) Int. Cl.⁵ : **B62K 19/30**, B62K 25/02

(21) Application number : **87200507.9**

(22) Date of filing : **19.03.87**

(54) Bicycle rear fork end.

(30) Priority : **26.03.86 IT 5318986 U**

(43) Date of publication of application :
**11.11.87 Bulletin 87/46**

(45) Publication of the grant of the patent :
**05.06.91 Bulletin 91/23**

(84) Designated Contracting States :
**BE CH DE ES FR GB LI NL**

(56) References cited :
**DE-A- 2 461 569**
**FR-A- 2 405 174**
**FR-A- 2 483 350**
**FR-A- 2 490 176**

(73) Proprietor : **GIOS di F.lli Gios s.n.c.**
**Strada Cebrosa 104/4**
**I-10036 Settimo Torinese Torino (IT)**

(72) Inventor : **Gios, Alfredo**
**via Santa Chiara 52**
**Torino (IT)**

(74) Representative : **Spandonari, Carlo**
**corso Re Umberto 56**
**I-10128 Torino (IT)**

EP 0 244 885 B1

Jouve, 18, rue Saint-Denis, 75001 PARIS

## Description

This invention relates to a bicycle rear fork end, for rear-wheel mounting, particularly for racing bicycles as set out in the first part of Cl. 1 ; such fork ends are disclosed in FR-A-2 490 176 and FR-A-2 483 350.

For mounting a rear wheel, a bicycle frame has, on each side of the wheel, a pair of tubes which extend towards each other from the ends of the seat-bearing upright tube, to the position of the hub, and are there connected to a fork end connecting both tubes together and having a seat for the wheel hub.

The conventional rear-wheel fork end is a cast plate having two projections adapted to be fitted to the ends of the above pair of tubes, which tubes are then squeezed and welded thereon. Moreover, the plate has a seat for one end of the hub, in the form of a chain-tightening slot extending lengthwise to the bicycle frame, so that the axle distance between the hub and the pedals can be changed, and so that possible misalignments of the wheel with respect to the midplane of the frame can be compensated. The hub is then locked in the desired position by means of a fastener such as a wing nut, or more modernly, by means of a toggle clamp. Such chain-tightening slot in prior fork ends usually opened rearwardly, but nowadays it always opens forwardly, so that the wheel can be quickly changed.

Furthermore, in order to avoid an awkward search for the best adjustment of the hub at each change of the wheel, particularly in racing bicycles, a threaded pin is provided to adjustably project from the bottom of the mounting slot, to provide an abutment, to be adjusted once for all during line-up of the bicycle.

Even with this device, because of the uncertainty of abutment of the hub against the pin head, and also because of the clearance between the slot and the hub, such rear fork ends having an adjustment pin have the drawback that a small adjustment is still required at each wheel change. This circumstance lengthens the time required for changing the wheel, thus adversely affecting a race.

FR-A-2 483 350 and FR-A-2 490 176 both describe fork ends where the conventional pin head abutment is replaced by a member having a concave curved surface against which the hub can nest. This arrangement has an improved accuracy of alignment, which is better maintained over wheel changes.

However, another drawback of prior art fork ends is that the hub is liable to slip in the slot, either due to insufficient clamp tightening or to partial clamp failure, since the hub is only held against the pulling action of the chain by friction of the clamp upon the fork end.

A further drawback of prior art fork ends is that the wheel rim must be kept a few centimeters away from the seat-bearing upright tube, i.e. at a distance greater than the distance that the hub must be moved in order to remove it from the slot. This is undesiderable, since the trend in racing bicycles is to shorten the distance between the wheel axes, in an effort to improve the efficiency of the bicycle.

Another drawback of rear-wheel fork ends of the prior art is that said projections joining with the rear tubes of the frame must be made with an angle corresponding to the angle between the tubes. Such angle varies form one frame to the next, and consequently several models fo fork end are required, with differently angled projections for the different frames.

This invention therefore has the object of providing a bicycle fork end for rear-wheel mounting, which avoids the above drawbacks, and more particularly where any liability to hub slipping is avoided, even when the hub is insufficiently tightened on the fork end, and which allows the wheel to be mounted as close as desired to the upright tube, while maintaining an accurate adjustment of the alignment over wheel changes.

Another object is to provide a fork end such that it can be adapted, without forcing, to frames having differently angled rear tubes, without the need for providing differently shaped fork ends for different frames, with ensuing advantages both in stock count reduction and in decrease of the expense for moulds.

The invention achieves the above and other objects, such as will appear from the following disclosure, with a bicycle rear fork end having the features recited in claim 1.

A preferred embodiment of the invention will now be described, and more particularly of a right-hand rear fork end, the left-hand fork end being substantially mirrorlike. The disclosure is given by way of nonlimiting example, with reference to the attached drawings, wherein :

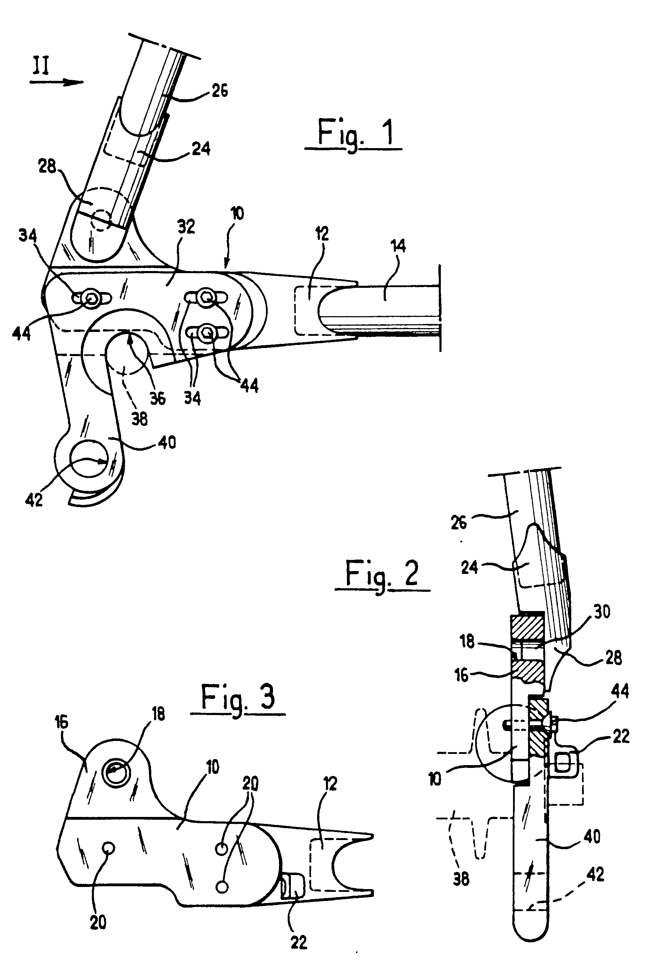

Fig. 1 is a side view of the preferred embodiment of a right-hand rear fork end, connected with frame tubes, shown partly broken ;

Fig. 2 is an end view of the fork end of Fig. 1, in the direction of arrow II in Fig. 1 ; and

Fig. 3 is a side view of the main body of the fork end of Fig. 1, partially broken away.

With reference to the Figures of the drawing, a fork end for rear-wheel mounting according to the preferred embodiment of the invention has a main body formed as a steel plate 10, preferably obtained by precision casting, forwardly ending in a socket 12 for fitting and welding of a lower rear tube 14 of a bicycle (not shown), and having a thickened upper lug 16, provided with a bore 18. The thickness of plate 10 is half the thickness of lug 16. Plate 10 also has three threaded bores 20, arranged in triangle. A bridge 22 for the cable of the gear shift is preferably obtained integrally near socket 12.

The fork end of the invention may further include a socket 24 for the upper rear tube 26 of the bicycle, provided with an extension 28 having an integral cross pin 30, the pin being housed in bore 18 in plate 10, where it is welded or braised in a desired inclination.

The fork end further comprises a wheel-mounting member 32, which also is made as a preferably precision-cast steel plate, with three slots 34 arranged in a triangle identically to the bores in the main body 10, with countersunk outside edges, and with a downwardly open slot 36 for mounting a wheel hub 38 (shown in dashed lines). Wheel-mounting member 32 also preferably comprises (only for the right-hand fork end, where a gear shift is provided) a spur 40 with a hole 42 for housing a gear shift shunt (not shown), as known per se. The thickness of the portion of the wheel-mounting member where the slots are provided is half the thickness of spur 40.

Wheel-mounting member 32 is fitted to main body 10 with slots 34 aligned with threaded bores 20, and is fastened with respective hexagonal-head screws 44, in a desired longitudinal position, to be adjusted during line-up of the bicycle. Due to the corresponding thickness reduction both in main body 10 and in wheel-mounting member 32, the assembly has levelled opposite surfaces, so that the various portions of hub 38 can be properly supported.

With a fork end as decribed above, the longitudinal position of the hub axis can be accurately adjusted once for all during line-up of the bicycle. The hub is then inserted from beneath into mounting slot 36, in a direction tangential to the chain, and takes an exactly defined position, not requiring any further fine adjustment even when the wheel is changed, e.g. during a race, with great advantage in change speed, in case of wheel failure. Moreover, the hub, after being locked in the required position, even in case of clamp loosening, will not slip under the chain pull, being held by positive abutment against the forward side of the slot.

Another advantage of the tangential insertion of the hub into the mounting slot is that removing (or inserting) the wheel from or into the bicycle frame does not require any approach of the wheel to the seat-bearing upright tube, as with prior fork ends. Therefore the wheel rim can be designed to be a a distance of a few millimeters from the upright tube, when in operating condition, rather than at a few centimeters, as in the prior art, and the frame can therefore be more compact.

With the articulated joint between socket 24 and main body 10, rear-wheel fork ends can be assembled for arbitrarily angled rear tubes of the frame, from a single set of parts, rather than providing a different fork end for each frame. The stock count is thereby reduced.

In particular, the number and arrangement of threaded bores in the main body (and therefore of slots in the wheel-mounting member) may be changed, or the the slots may be provided in the main body, and the threaded bores in the wheel-mounting member, and generally other known fastening means between the main body and the wheel-mounting member can be used, such as slides and the like.

Lastly, it is understood that the feature of an articulated upper socket can be dispensed with, whenever the circumstances of application of the invention do not require adaptability to different tube inclinations, the main body and the upper socket being then cast integrally.

All the above and other modifications, which are all directed to the same objects and advantages through functionally equivalent means, should be regarded as being within the scope of the invention, as defined in the attached claims.

## Claims

1. A bicycle rear fork end for rear-wheel mounting, particularly for racing bicycles, comprising a main body (10) having joint means (12, 16, 18, 24, 28, 30) for connection to a pair of rear tubes (14, 26) of a bicycle frame, and a slidably adjustable wheel-mounting member (32), which is connected to the main body by fastening means adjustable in a direction substantially longitudinal to the frame whereby the longitudinal position of the wheel-mounting member with respect to the main body can be adjusted and characterized in that the wheel-mounting member has a wheel hub-mounting slot (36) opening downwardly and extending in a direction substantially at right angles to said longitudinal direction.

2. The bicycle rear fork end of claim 1, characterised in that said mounting slot is opened downwardly.

3. The bicycle rear fork end of claim 1, wherein said fastening means comprise a portion of the main body provided with a plurality of threaded bores (20), a portion of said wheel-mounting member provided with a plurality of longitudinal slots (34) arranged identically with said threaded bores, and corresponding screws (44) having heads adapted to lock against the edges of said slots when screwed into said threaded bores.

4. The bicycle rear fork end of claim 3, wherein said threaded bores are three and are arranged in a triangle.

5. The bicycle rear fork end of claim 1, wherein said joint means for connection to the frame tubes comprise a first socket (12) opening forwardly in the main body and a second socket (24) opening with an upward inclination with respect to the main body.

6. The bicycle rear fork end of claim 5, wherein said second socket is articulated with respect to the main body, whereby its inclination can be changed.

## Ansprüche

1. Hinteres Endstück eines Fahrrads, für die Lagerung des Hinterrads, insb. für Rennenfahrräder, das einen Hauptteil (10) mit Verbindungsmitteln (12, 16, 18, 24, 28, 30) zur Zusammenfügung mit einem Paar von Hinterröhren (14, 26) eines Fahrradrahmens, und einen gleitend verstellbaren Radhalter (32) aufweist, der durch wesentlich in Rahmenlängsrichtung einstellbaren Befestigungsmitteln mit dem Hauptteil verbunden ist, wobei die Längslage des Radhalters in bezug auf den Hauptteil einstellbar ist, und dadurch gekennzeichnet, daß der Radhalter eine nach unten und wesentlich rechtwinklig zu der Rahmenlängsrichtung gehende Radnabehalterspalt (36) aufweist.

2. Hinteres Endstück eines Fahrrads von Anspruch 1, dadurch gekennzeichnet, daß die Radnabehalterspalt nach unten aufweist.

3. Hinteres Endstück eines Fahrrads von Anspruch 1, dadurch gekennzeichnet, daß die Verbindungsmittel einen mit einer Mehrheit von Schraubenlöchern (20) versehenen Teil des Hauptteils, einen mit einer Mehrheit von mit den Schraubenlöchern identisch angeordneten Längschlitzen (34) versehenen Teil des Radhalters, und entsprechende Schrauben (44) umfassen, wobei die Schrauben Köpfe aufweisen, die sich an die Schlitzenränder anziehen, wenn die Schrauben in den Schraubenlöchern eingeschraubt sind.

4. Hinteres Endstück eines Fahrrads von Anspruch 3, dadurch gekennzeichnet, daß die Schraubenlöcher drei sind und dreieckig angeordnet sind.

5. Hinteres Endstück eines Fahrrads von Anspruch 1, dadurch gekennzeichnet, daß die Verbindungsmittel zur Zusammenfügung mit den Rahmenröhren ein erstes, im Hauptteil nach vorne gewandtes Fitting (12) und ein zweites, in bezug auf den Hauptteil aufwärts geneigtes Fitting (24) aufweisen.

6. Hinteres Endstück eines Fahrrads von Anspruch 5, dadurch gekennzeichnet, daß das zweites Fitting in bezug auf den Hauptteil gegliedert ist, wobei dessen Neigung einstellbar ist.

**Revendications**

1. Patte de cadre de bicyclette pour le montage de la roue arrière, particulièrement pour bicyclettes de compétition, comprenant un corps principal (10) muni de moyens de liaison (12, 16, 18, 24, 28, 30) pour l'assemblage avec une paire de tubes arrière (14, 26) d'un cadre de bicyclette, et un élément d'appui de roue (32) réglable à coulisse, qui est lié au corps principal par des moyens d'enclenchement réglables en direction essentiellement longitudinale au cadre, de façon que la position longitudinale de l'élément d'appui de roue puisse être réglée relativement au corps principal, et caractérisée en ce que l'élément d'appui de roue a une encoche (36) de butée du moyeu de la roue, laquelle s'ouvre vers le bas et s'étend en direction essentiellement orthogonaie à ladite direction longitudinale.

2. Patte de cadre de bicyclette selon la revendication 1, caractérisée en ce que ladite encoche de butée s'ouvre vers le bas.

3. Patte de cadre de bicyclette selon la revendication 1, caractérisée en ce que lesdits moyens d'enclenchement sont constitués d'une partie du corps principal qui est munie d'une pluralité de trous taraudés (20), d'une partie dudit élément d'appui de roue qui est munie d'une pluralité de fentes longitudinales (34) en disposition identique avec lesdits trous taraudés, et de vis correspondantes (44) ayant des têtes aptes à se serrer contre les bords desdites fentes lorsqu'elles sont vissées dans lesdits trous taraudés.

4. Patte de cadre de bicyclette selon la revendication 3, caractérisée en ce que lesdits trous taraudés sont au nombre de trois et sont disposés en triangle.

5. Patte de cadre de bicyclette selon la revendication 1, caractérisée en ce que lesdits moyens de liaison pour l'assemblage avec les tubes du cadre comprennent une première pipe (12) s'ouvrant vers l'avant dans le corps principal et une deuxième pipe (24) s'ouvrant avec inclinaison vers le haut relativement au corps principal.

6. Patte de cadre de bicyclette selon la revendication 5, caractérisée en ce que ladite deuxième pipe est articulée relativement au corps principal, de façon que son inclinaison peut être changée.

II →

26

24

28

32

10

12

14

34

44

36   34   44

38

40

42

# Fig. 1

# Fig. 2

26

24

30

18

16

28

44

22

10

38

40

42

# Fig. 3

16   18

10

20

20

12

20

22